# DEMANDE DE BREVET EUROPEEN

(11) **EP 4 752 610 A1**
(43) Date de publication de la demande: **03.06.2026**
(21) Numéro de dépôt: 25218243.1
(22) Date de dépôt: 25.11.2025
(51) Int. Cl.: G02B 6/12, G02B 6/122, G02F 1/225, G02B 6/13

(54) **STRUCTURE DE COUPLAGE OPTIQUE**

(30) Priorité: 29.11.2024 FR 2413235
(71) Demandeur: Commissariat à l'Energie Atomique et aux Energies Alternatives, 75015 Paris (FR); THALES, 92190 Meudon (FR)
(72) Inventeur: DESIERES, Yohan, 38054 GRENOBLE CEDEX 09 (FR); BEN BRAHAM, Clément, 38054 GRENOBLE CEDEX 09 (FR)
(74) Mandataire: Santarelli

(57) **Abrégé**

L'invention porte sur une structure de couplage couplant un premier mode optique à un deuxième, l'indice effectif du deuxième étant strictement supérieur à celui du premier. Elle comporte un premier et un deuxième guides d'onde configurés pour guider respectivement les premier et deuxième modes optique. Le cœur du premier guide d'onde se prolonge en une section proximale et une section distale. Le deuxième guide d'onde comprend une base et une arête. Un guide d'onde hybride, intercalé entre le premier et le deuxième guides d'onde, comprend la section proximale et une extension de la base, agencées de façon à coopérer pour guider un mode optique intermédiaire. L'indice effectif du mode optique intermédiaire est strictement supérieur à l'indice effectif du deuxième mode optique. Une section de transition modale comprenant la section distale, s'étend depuis le guide d'onde hybride jusqu'au deuxième guide d'onde pour coupler le mode optique intermédiaire au deuxième mode optique.

## Description

### DOMAINE TECHNIQUE

Le domaine de l'invention est celui des structures de couplage optique en photonique intégrée, comme par exemple, une structure de couplage optique entre un premier guide d'onde, et un deuxième guide d'onde, le deuxième guide d'onde pouvant être couplé optiquement à un ou plusieurs composants photoniques actifs.

### ÉTAT DE LA TECHNIQUE ANTÉRIEURE

Dans le domaine de la photonique intégrée, il est souvent nécessaire de coupler des guides d'onde en des matériaux différents, notamment pour concevoir des dispositifs mettant en œuvre des composants photoniques actifs. Ces dispositifs sont aujourd'hui largement répandus dans le domaine des télécommunications, des échanges de données entre puce, du calcul numérique ou encore des capteurs. On peut par exemple citer les LiDAR, les capteurs de gaz, les biocapteurs... Les composants photoniques actifs peuvent être de tous types, comme par exemple des sources laser, des photodiodes, des commutateurs de N guides d'onde vers P guides d'onde, des réseaux d'antennes à commande de phase, ou encore des modulateurs de phase ou d'intensité.

En photonique intégrée, il est commun de réaliser des guides d'onde en silicium, encapsulés de silice. Un fort contraste d'indices de réfraction entre la silice et le silicium permet de réaliser des circuits photoniques compacts. Ces matériaux permettent également de tirer avantage des infrastructures existantes pour la fabrication des circuits CMOS, à savoir des plaques de grands diamètres et des équipements de lithographie à haute résolution. Il est également possible d'exploiter les propriétés semiconductrices du silicium, éventuellement additionné de germanium, pour réaliser des composants photoniques actifs.

Le silicium présente cependant un certain nombre d'inconvénients. Il n'est par exemple pas transparent pour des longueurs d'onde inférieures à 1,1 µm, il n'a pas de gap direct, et les composants photoniques actifs en silicium sont limités en fréquence.

Un matériau alternatif particulièrement intéressant est le nitrure de silicium (SiₓN_{y}), également couramment utilisé pour la fabrication de circuits CMOS. Un guide d'onde en nitrure de silicium induit moins de pertes de propagation qu'un guide d'onde en silicium, notamment lorsque le nitrure de silicium est proche d'une composition stœchiométrique (Si₃N₄). A la différence du silicium, le nitrure de silicium transmet la lumière pour des longueurs d'onde inférieures à 1,1µm (et typiquement allant de 400 nm à 5 µm) .

Il est possible d'exploiter des propriétés non-linéaires du nitrure de silicium pour réaliser certains composants photoniques actifs (comme les lasers), mais il est préférable, et souvent indispensable, d'utiliser des matériaux actifs plus adaptés. Parmi ceux-ci, le niobate de lithium (LiNbO3), le titanate de baryum (BaTiO3) ou des composés formés d'éléments pris parmi les colonnes III et V du tableau périodique des éléments possèdent des propriétés physiques particulièrement intéressantes pour réaliser des composants photoniques performants, couplés optiquement à un circuit photonique comprenant des composants passifs, par exemple en silicium ou en nitrure de silicium.

Il est par conséquent nécessaire de coupler optiquement un premier guide d'onde, par exemple en silicium ou en nitrure de silicium, avec un deuxième guide d'onde en un matériau actif différent de celui du premier guide d'onde. Les procédés de fabrication standard de l'industrie des semiconducteurs exigent alors que les premier et deuxième guides d'onde soient agencés dans des plans parallèles distincts.

Dans cette configuration, et pour limiter des pertes par couplage, il est connu de coupler optiquement un premier mode optique et un deuxième mode optique par une structure de couplage adiabatique. Les premier et deuxième modes optiques ont respectivement, un premier et un deuxième indice effectif, le premier indice effectif étant strictement supérieur au deuxième indice effectif. Le premier mode optique est guidé par un premier guide d'onde et le deuxième mode optique est guidé par un deuxième guide d'onde. Des axes optiques respectifs des premier et deuxième guides d'onde sont alignés parallèlement l'un à l'autre à l'intérieur de la structure de couplage adiabatique. Une largeur du premier guide d'onde se rétrécit progressivement dans une section de rétrécissement (ou taper, en anglais), de façon à assurer un couplage optique avec le deuxième guide d'onde. Un couplage fonctionnel nécessite une finesse de la section de rétrécissement qui demande de faire appel à des outils de lithographie de haute résolution pour la réaliser, par exemple pouvant résoudre des motifs ayant une dimension inférieure à 450 nm. Dans le cadre d'une application industrielle, ceux-ci sont seulement disponibles sur des lignes de fabrication de circuits CMOS. Or, certains matériaux actifs ne sont pas admis sur ces outils car ils contiennent des éléments contaminants. Il apparaît donc que le choix de géométries et/ou de dimensionnement et/ou de matériaux pour le deuxième guide d'onde est contraint par la valeur du premier indice effectif.

Un exemple de composant photonique actif comprenant du niobate de lithium (LiNbO3) est décrit dans le document T. Vanackere et al. « Heterogeneous integration of a high-speed lithium niobate modulator on silicon nitride using micro-transfer printing", APL Photonics 8, 086102 (2023). Il s'agit ici d'un modulateur comprenant deux bras d'un interféromètre de Mach-Zehnder. Chaque bras comporte deux structures de couplage entre un premier guide d'onde et un guide hybride. Le premier guide d'onde comprend un cœur en nitrure de silicium qui se prolonge en une section de liaison. Le guide hybride comprend la section de liaison et une base en niobate de lithium en contact avec la section de liaison.

Une section de rétrécissement est gravée à deux extrémités opposées de portions en niobate de lithium. Une portion en niobate de lithium est transférée sur chaque section de liaison, de façon à centrer chaque section de rétrécissement sur une section de liaison respective. La base de chaque guide hybride est une partie d'une portion en niobate de lithium. Le guide hybride est par conséquent couplé bout à bout avec le premier guide d'onde par la structure de couplage, les sections de rétrécissement permettant de limiter des pertes par diffraction au niveau de la structure de couplage.

Des électrodes sont formées sur les portions en niobate de lithium de manière à appliquer un champ électrique dans une région active de chaque portion en niobate de lithium en regard d'une section de liaison en nitrure de silicium. Le champ électrique est apte à modifier un indice de réfraction de la région active par effet Pockels.

En fonctionnement, un mode optique entrant est séparé à parts égales en deux modes optiques intermédiaires guidés par les guides d'onde hybride. Au niveau d'un guide d'onde hybride, le mode optique intermédiaire est confiné par la section de liaison en nitrure de silicium. Il n'interagit donc pas en totalité avec la région active, ce qui induit une perte d'efficacité du modulateur. Il existe donc un besoin pour remplacer chaque structure de couplage entre le premier guide et le guide hybride par une structure de couplage entre le premier guide et un deuxième guide entièrement en niobate de lithium.

Des dimensions particulières de la section de rétrécissement permettent de minimiser des pertes en transmission induites par une imprécision d'alignement des sections de rétrécissement de 0,5 µm (3σ) lors de l'opération de transfert des sections en niobate de lithium, sans toutefois donner entièrement satisfaction puisqu'un décentrage de 0,1 µm entraîne une perte de transmission de 0,5 dB. Ces dimensions, autour de 100 nm, impliquent de plus, d'utiliser un équipement de lithographie à haute résolution, non disponible dans une ligne de production industrielle acceptant du niobate de lithium. Un outil à faisceau d'électron est utilisé dans ce document, or un tel outil procure une faible cadence de production. Il apparaît donc un besoin pour remplacer chaque structure de couplage par une structure de couplage plus facile à réaliser et davantage robuste à des incertitudes du procédé de fabrication.

### EXPOSÉ DE L'INVENTION

L'invention a pour objectif de remédier au moins en partie aux inconvénients de l'art antérieur, et plus particulièrement de proposer une structure de couplage pour coupler optiquement un premier mode optique ayant un premier indice effectif et un deuxième mode optique ayant un deuxième indice effectif strictement supérieur au premier indice effectif, facile à réaliser, et pouvant être fabriquer en fort volume.

Pour cela, l'objet de l'invention est une structure de couplage pour coupler optiquement un premier mode optique ayant un premier indice effectif et un deuxième mode optique ayant un deuxième indice effectif strictement supérieur au premier indice effectif. La structure de couplage comporte un premier guide d'onde comprenant un cœur configuré pour guider le premier mode optique, le cœur se prolongeant au-delà du premier guide d'onde en un prolongement comportant une section proximale, proche du premier guide d'onde, et une section distale en contact avec la section proximale. Elle comporte un deuxième guide d'onde comprenant une base et une arête, configurées pour guider le deuxième mode optique. Elle comporte un guide d'onde hybride, intercalé entre le premier et le deuxième guides d'onde, comprenant la section proximale et une extension de la base au-delà du deuxième guide d'onde, agencées de façon à coopérer pour guider un mode optique intermédiaire couplé optiquement au premier mode optique par le prolongement. Elle comporte une section de transition modale s'étendant depuis le guide d'onde hybride jusqu'au deuxième guide d'onde, comprenant la section distale.

La structure de couplage est telle que la section proximale a une largeur au niveau d'une jonction avec la section distale telle qu'un indice effectif du mode optique intermédiaire est strictement supérieur au deuxième indice effectif. Elle est telle que la section distale se rétrécit continument en s'éloignant du guide d'onde hybride de façon à réaliser un couplage optique entre le mode optique intermédiaire et le deuxième mode optique.

Certains aspects préférés mais non limitatifs de cette structure de couplage sont les suivants.

La section proximale peut être séparée de l'extension de la base par une portion intercalaire diélectrique. La portion intercalaire peut être en oxyde de silicium ou en oxyde d'aluminium.

Le prolongement peut comprendre en outre une section tampon intercalée entre le premier guide d'onde et la section proximale, l'extension de la base peut comporter un biseau en regard de la section tampon pouvant faire un angle α inférieur ou égal à 10° avec un axe optique du premier guide d'onde, et pouvant s'étendre de part et d'autre de la section tampon.

L'angle α peut être inférieur ou égal à 8°. La section tampon peut avoir une largeur comprise entre 1,3 µm et 2 µm. La portion intercalaire peut avoir une épaisseur S comprise entre 50 nm et 200 nm.

Le cœur peut être en nitrure de silicium. La base peut être en niobate de lithium, en tantalate de lithium, ou en titanate de baryum.

L'arête peut être en niobate de lithium, en tantalate de lithium, en titanate de baryum, en nitrure de silicium, en oxyde de titane, en oxyde de tantale, en carbure de silicium, ou en silicium.

L'arête peut avoir une largeur W₃₂₀ supérieure ou égale à 450 nm. La structure de couplage peut comporter en outre un substrat, le deuxième guide d'onde peut s'étendre parallèlement à une face supérieure du substrat et l'arête peut avoir des flancs pouvant faire un angle inférieur ou égal à 80° par rapport à la face supérieur du substrat.

L'extension peut avoir une hauteur H_{2b} telle que l'indice effectif de tout mode optique de même longueur d'onde et de même polarisation que le premier mode optique, susceptible de se propager dans l'extension, peut être strictement inférieur au premier indice effectif.

L'invention porte également sur un modulateur optique comprenant une structure de couplage selon l'une quelconque des caractéristiques précédentes. Le moduleur peut être un modulateur Mach-Zehnder pouvant comprendre deux bras, un bras pouvant comporter un déphaseur commandable par effet Pockels, couplé optiquement au deuxième guide d'onde de la structure de couplage par un couplage bout-à-bout.

L'invention porte également sur un procédé de fabrication d'une structure de couplage selon l'une quelconque des caractéristiques précédentes, comprenant les étapes successives suivantes : fourniture d'un premier ensemble comprenant un substrat, le cœur du premier guide d'onde et une couche de confinement supérieure, tel que le cœur s'étend sur le substrat parallèlement à une face supérieure du substrat, et la couche de confinement supérieure encapsule le cœur ; report d'une couche active sur le cœur et la couche de confinement supérieure ; formation du deuxième guide d'onde dans la couche active.

La couche de confinement supérieure peut avoir une face de collage pouvant recouvrir le cœur, et pouvant être sensiblement parallèle à la face supérieure. L'étape de report peut être un collage moléculaire de la face de collage avec une couche de collage en contact avec la couche active. La portion intercalaire peut consister en une partie de la couche de confinement supérieure et une partie de la couche de collage.

La couche de confinement supérieure et la couche de collage peuvent être en oxyde de silicium. La couche active peut être en niobate de lithium, en tantalate de lithium, ou en titanate de baryum.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
la figure 1A est une vue schématique de dessus d'un premier mode de réalisation d'une structure de couplage selon l'invention ;
la figure 1B est une vue schématique du premier mode de réalisation selon la coupe A-A de la figure 1A ;
la figure 1C est une vue schématique du premier mode de réalisation selon la coupe B-B de la figure 1A ;
la figure 1D est une vue schématique du premier mode de réalisation selon la coupe C-C de la figure 1A ;
la figure 1E est une vue schématique du premier mode de réalisation selon la coupe D-D de la figure 1A ;
la figure 2A est une vue schématique de dessus d'un deuxième mode de réalisation d'une structure de couplage selon l'invention ;
la figure 2B est une vue schématique de dessus d'une variante du deuxième mode de réalisation ;
la figure 3 illustre des premiers résultats de simulation utiles pour concevoir une structure de couplage selon l'invention ;
la figure 4 illustre des deuxièmes résultats de simulation utiles pour concevoir une structure de couplage selon l'invention ;
les figures 5A, 5B et 5C illustrent des troisièmes résultats de simulation utiles pour concevoir une structure de couplage selon l'invention ;
la figure 6 est une vue schématique de dessus d'un modulateur Mach-Zehnder mettant en oeuvre des structures de couplages selon la variante du deuxième mode de réalisation ;
les figures 7A à 7F illustrent des étapes d'un procédé de fabrication d'une structure de couplage selon l'invention.

### EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près, et de préférence à 5% près. Par ailleurs, les termes « compris entre ... et ... » et équivalents signifient que les bornes sont incluses, sauf mention contraire.

L'invention porte sur une structure de couplage comportant un premier guide d'onde, un deuxième guide d'onde et un guide d'onde hybride intercalé entre le premier guide d'onde et le deuxième guide d'onde. Des contraintes imposent qu'un premier mode optique guidé par le premier guide d'onde a un indice effectif strictement inférieur à un deuxième indice effectif d'un deuxième mode guidé par le deuxième guide d'onde. Les contraintes peuvent être de toute nature, par exemple un matériau particulier pour minimiser des pertes de propagation pour le premier guide d'onde, des dimensions particulières pour réaliser un composant photonique actif couplé optiquement au deuxième guide d'onde, un profil de gravure induit par un procédé de gravure utilisé pour la réalisation du deuxième guide d'onde, un matériau ayant une propriété physique particulière pour réaliser le deuxième guide d'onde.

Le premier guide d'onde a un cœur qui se prolonge au-delà du premier guide d'onde en un prolongement qui comprend une section proximale et une section distale. Le deuxième guide d'onde est un guide d'onde en arête, c'est-à-dire qu'il comporte une arête surélevée au-dessus d'une base. Le guide d'onde hybride comprend la section proximale et une extension de la base au-delà du deuxième guide d'onde. La section proximale et l'extension de la base coopèrent de façon à guider un mode optique intermédiaire.

En fonctionnement, le mode optique intermédiaire est couplé optiquement au premier mode optique par le prolongement, et couplé optiquement au deuxième mode optique. La section proximale a une largeur supérieure à une largeur minimale au-delà de laquelle le mode optique intermédiaire a un indice effectif strictement supérieur au deuxième indice effectif.

La structure de couplage comporte en outre une section de transition modale s'étendant depuis le guide d'onde hybride jusqu'au deuxième guide d'onde, comprenant la section distale. La section de transition modale est telle que la section distale se rétrécit continument en s'éloignant du guide d'onde hybride de façon à faire décroître progressivement l'indice effectif du mode optique intermédiaire jusqu'à des valeurs inférieures au deuxième indice effectif et ainsi réaliser un couplage optique entre le mode optique intermédiaire et le deuxième mode optique.

Il est ainsi possible de faire coopérer un élément du premier guide d'onde (le prolongement) et un élément du deuxième guide d'onde (une extension de la base) pour coupler optiquement le premier guide d'onde et le deuxième guide d'onde, ceci bien que le deuxième indice effectif soit strictement supérieur au premier indice effectif. De plus, la réalisation du deuxième guide d'onde avec l'extension de sa base n'exige pas une étape de lithographie à haute résolution. Une étape de lithographie est considérée de haute résolution lorsqu'elle permet de résoudre des motifs, par exemple une pointe, dont une largeur est inférieure à 450 nm, voire inférieure à 250 nm.

Dans toute la description, deux composants optiques sont dits couplés optiquement lorsqu'un mode optique peut se propager au moins en partie dans les deux composants optiques, éventuellement via des composants optiques intermédiaires. Deux modes optiques guidés sont dits couplés optiquement lorsque la puissance de l'un est issue intégralement de la puissance de l'autre, sans conversion intermédiaire en une autre forme d'énergie.

L'invention est particulièrement avantageuse pour coupler un premier guide d'onde en nitrure de silicium avec un deuxième guide d'onde en niobate de lithium. En effet, plusieurs facteurs impliquent que l'indice effectif d'un mode optique guidé par le deuxième guide d'onde est strictement supérieur à l'indice effectif d'un mode optique guidé par le premier guide d'onde. Notamment, le nitrure de silicium a un indice de réfraction inférieur à un indice de réfraction du niobate de lithium. Une épaisseur suffisante de niobate de lithium est nécessaire pour réaliser un composant photonique actif, par exemple comprise entre 300 nm et 800 nm. Un procédé de gravure pour former le deuxième guide d'onde conduit à obtenir un deuxième guide d'onde comportant des flancs inclinés.

Dans toute la description, un guide d'onde est un guide d'onde monomode ou multimode apte à confiner la lumière, par opposition aux guides optiques à l'intérieur desquels la lumière se propage par réflexion totale interne. Sans plus de précisions, un guide d'onde peut être de type quelconque. Cela peut par exemple être un guide ruban, en arête ou planaire. Un guide d'onde a un cœur et, éventuellement, une ou plusieurs couches de confinement entourant le cœur de façon à être en contact physique avec le cœur. Un contraste ou une variation d'indices de réfraction entre d'une part le cœur et d'autre part, la ou les couches de confinement ou un gaz ou du vide, permet de confiner la lumière. Les guides d'onde peuvent être repérés par leurs cœurs sur les figures. De même, sans plus de précision, un indice de réfraction d'un guide d'onde est un indice de réfraction du cœur du guide d'onde ; une distance séparant deux guides d'onde est la distance séparant les cœurs des guides d'onde respectifs ; le matériau d'un guide d'onde est le matériau du cœur du guide d'onde ; lorsqu'un guide d'onde s'étend selon une direction, on entend que le cœur du guide d'onde s'étend selon cette direction ; lorsqu'un guide d'onde est en contact avec une couche, on entend que le cœur du guide d'onde est en contact avec la couche.

Dans toute la description, il est donné à « indice effectif » son sens commun dans le domaine technique. Par soucis de clarté, il est cependant précisé que l'indice effectif d'un mode optique guidé par un guide d'onde est la grandeur scalaire égale à l'indice de réfraction d'un milieu homogène fictif à l'intérieur duquel une onde lumineuse de même longueur d'onde que le mode guidé se propagerait en espace libre à la même vitesse de phase que le mode guidé dans le guide d'onde. L'indice effectif dépend notamment de la géométrie du guide d'onde et des matériaux le constituant. Il peut être obtenu par simulation.

Par couche, on entend une étendue constituée d'une ou plusieurs sous-couches d'un matériau dont l'épaisseur suivant un axe z est inférieure, par exemple dix fois, voire vingt fois, à ses dimensions longitudinales de largeur et de longueur dans un plan (x, y) perpendiculaire à l'axe z. Une couche peut être structurée, ou une structure d'épaisseur sensiblement constante s'étendant majoritairement selon un plan principal. Lorsqu'elle consiste en plusieurs sous-couches, les sous-couches peuvent être en des matériaux différents. La ou les sous-couches s'étendent dans des plans sensiblement parallèles au plan (x, y). Lorsqu'une couche possède une propriété, il est entendu que lorsqu'elle consiste en plusieurs sous-couches, toutes les sous-couches possèdent la même propriété, sauf mention explicite du contraire. A titre d'exemple, à défaut de plus de précision, une couche en métal ou en un matériau semiconducteur ou amorphe peut comporter plusieurs sous-couches, toutes respectivement en métal, en un matériau semiconducteur, ou amorphes. Une couche peut être conforme, ce qui implique qu'elle s'étend sur une surface, par exemple non-plane, et qu'elle épouse cette surface.

Des modes de réalisation particuliers vont être décrits se rapportant à une structure de couplage entre un premier guide d'onde de type ruban et un deuxième guide d'onde en arête. Cependant, ces modes de réalisation peuvent être adaptés à un premier guide d'onde et/ou un deuxième guide d'onde d'un autre type, par exemple un premier guide d'onde en arête, et/ou un deuxième guide d'onde planaire.

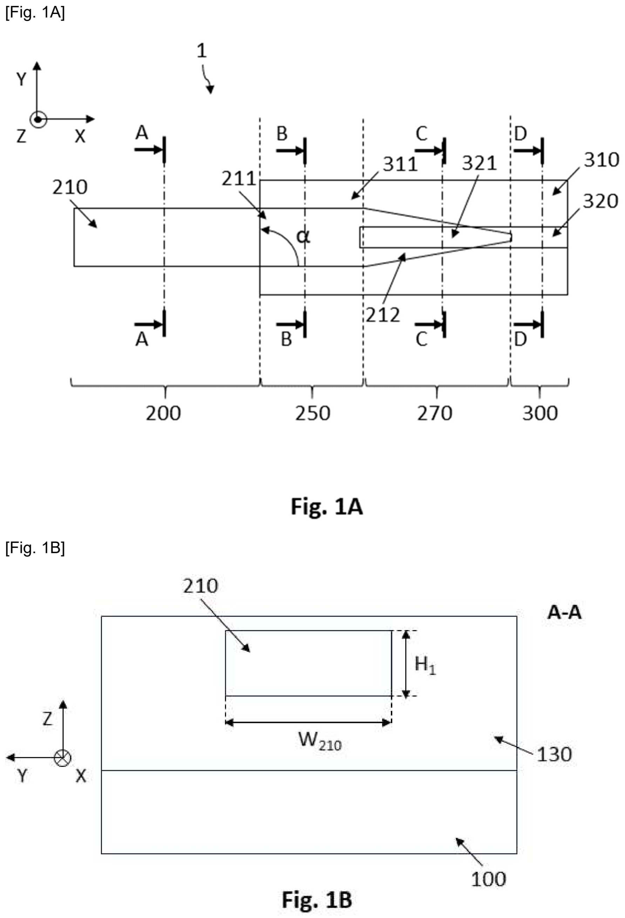

Dans un premier temps, un premier mode de réalisation d'une structure de couplage 1 selon l'invention va être décrit en lien avec les figures 1A à 1E. La figure 1A est une vue de dessus sur laquelle seule certains éléments ont été représentés. Les figure 1B à 1E sont des vues selon les coupes respectives A-A, B-B, C-C et D-D, représentées sur la figure 1A.

La structure de couplage 1 est destinée à coupler optiquement un premier mode optique ayant un premier indice effectif et un deuxième mode optique ayant un deuxième indice effectif strictement supérieur au premier indice effectif. Les premier et deuxième modes optiques ont la même longueur d'onde λ.

La structure de couplage 1 comprend un substrat 100, un premier guide d'onde 200, un guide d'onde hybride 250, une section de transition modale 270 et un deuxième guide d'onde 300. Le substrat 100 a une face supérieure sensiblement plane. Le premier guide d'onde 200, le guide d'onde hybride 250, la section de transition modale 270 et le deuxième guide d'onde 300 s'étendent successivement sur le substrat 100, le long d'un axe optique orienté depuis le premier guide d'onde 200 vers le deuxième guide d'onde 300, dans des plans sensiblement parallèles à la face supérieure, situés du même côté du substrat 100 que la face supérieure.

On définit ici et pour la suite de la description un repère direct tridimensionnel orthogonal (X, Y, Z), où les axes X et Y forment un plan parallèle à la face supérieure du substrat 100, l'axe X étant orienté parallèlement à l'axe optique, et où l'axe Z est orienté de manière sensiblement orthogonale à la face supérieure du substrat 100, depuis la face supérieure vers le premier guide d'onde 200. Dans la suite de la description, les termes « vertical » et « verticalement » s'entendent comme étant relatifs à une orientation sensiblement parallèle à l'axe Z, et les termes « horizontal » et « horizontalement » comme étant relatifs à une orientation sensiblement parallèle au plan (X, Y). Par ailleurs, les termes « inférieur » et « supérieur » s'entendent comme étant relatifs à un positionnement croissant lorsqu'on s'éloigne du substrat 100 suivant la direction +Z. Le terme « latéral » se réfère à une orientation sensiblement parallèle à l'axe Z.

Le substrat 100 peut être issu d'une plaque en silicium, après des étapes éventuelles de découpe et/ou d'amincissement. Une couche de confinement 130 s'étend sur le substrat 100 de façon à être en contact avec la face supérieure du substrat 100. La couche de confinement 130 a une face supérieure d'un côté de la couche de confinement 130 opposé au substrat 100. La face supérieure de la couche de confinement 130 est sensiblement plane et parallèle à la face supérieure du substrat 100.

La couche de confinement 130 est en un ou plusieurs matériaux transparents à la longueur d'onde λ, par exemple en un matériau semiconducteur ou en un matériau diélectrique. Elle peut par exemple consister en une sous-couche inférieure en contact avec le substrat 100 et une ou plusieurs sous-couches de collage en contact avec la sous-couche inférieure. La sous-couche inférieure peut par exemple être en oxyde de silicium. La couche de confinement 130 peut comprendre une ou deux sous-couches de collage, par exemple en nitrure de silicium ou en oxyde d'aluminium, incluant éventuellement une interface de collage. La couche de confinement 130 est ici en oxyde de silicium.

Le premier guide d'onde 200 comporte un cœur 210 (figure 1B). Le cœur 210 s'étend dans la couche de confinement 130, parallèlement à l'axe optique et à la face supérieure du substrat 100. Il peut affleurer la face supérieure de la couche de confinement 130, ou, comme représenté ici, être entouré de toutes parts par la couche de confinement 130. Dans cet exemple, le cœur 210 a une section rectangulaire dans tout plan de coupe parallèle au plan (Y, Z). Il a une largeur W₂₁₀ mesurée parallèlement à l'axe Y, et une hauteur H₁ mesurée parallèlement à l'axe Z. La section du cœur 210 peut avoir toute forme permettant de propager un mode optique dans le premier guide d'onde 200.

Le cœur 210 a un indice de réfraction strictement supérieur à un indice de réfraction de la couche de confinement 130. Il est ici en nitrure de silicium. Alternativement, il peut être en silicium, en carbure de silicium, en nitrure d'aluminium, en oxyde de titane, en oxyde de tantale, en diamant, ou en un composé à base de nitrure de gallium.

Le cœur 210 se prolonge au-delà du premier guide d'onde 200, dans la direction +X, en un prolongement. Le prolongement comporte une section proximale 211, suivie d'une section distale 212. La section proximale 211 est en contact avec le premier guide d'onde 200 et la section distale 212 est en contact avec la section proximale 211. Le cœur 210, la section proximale 211 et la section distale 212 sont en un même matériau. La section proximale 211, respectivement distale 212, a une largeur W₂₁₁, respectivement W₂₁₂, mesurée parallèlement à l'axe Y. Les sections proximale et distale 211, 212 ont une hauteur constante et égale à H₁, mesurée parallèlement à l'axe Z. Les largeurs W₂₁₁ et W₂₁₂ peuvent varier le long de l'axe X.

Le deuxième guide d'onde 300 comporte une base 310 et une arête 320. La base 310 s'étend sur la couche de confinement 130 de façon à être en contact avec la face supérieure de la couche de confinement 130. Elle a une largeur W₃₁₀ mesurée parallèlement à l'axe Y, et une hauteur H_{2b} mesurée parallèlement à l'axe Z. La hauteur H_{2b} est sensiblement constante. La base 310 a ici une section rectangulaire dans tout plan de coupe parallèle au plan (Y, Z).

L'arête 320 est une partie surélevée par rapport à la base 310. Elle s'étend sur la base 310 parallèlement à l'axe optique et à l'axe X, d'un côté de la base 310 opposé à la couche de confinement 130. Elle a des flancs faisant un angle θ avec le plan (X, Y). L'angle θ est par exemple compris entre 40° et 90°, ou entre 40° et 80°, ou entre 40° et 70°, ou sensiblement égal à 50° ou 60°. Elle s'étend verticalement depuis la base 310 sur une hauteur H₂ₐ mesurée parallèlement à l'axe Z. Elle a une largeur W₃₂₀ mesurée parallèlement à l'axe Y, au niveau d'une face supérieure de l'arête 320. La hauteur H₂ₐ est ici constante.

L'arête 320 et la base 310 sont par exemple en un même matériau transparent à la longueur d'onde λ. Le matériau peut être par exemple un matériau ayant une propriété physique permettant de réaliser un composant photonique actif, tel qu'un matériau semiconducteur et/ou un matériau piézoélectrique et/ou un matériau optique non linéaire de deuxième ordre ou de troisième ordre. L'arête 320 et la base 310 sont ici en niobate de lithium (LiNbO3). Elles peuvent par exemple être également en titanate de baryum (BaTiO3), en tantalate de lithium (LaTiO₃), ou en pérovskite.

Alternativement, l'arête 320 et la base 310 peuvent être en des matériaux différents. L'arête 320 peut par exemple être en nitrure de silicium, en oxyde de titane, en oxyde de tantale, en carbure de silicium, en silicium, en un chalcogénure ou en tout matériau semiconducteur ou diélectrique transparent à la longueur d'onde du premier et deuxième modes optiques. La base 310 peut être en niobate de lithium, en titanate de baryum, en tantalate de lithium, ou un autre matériau de type pérovskite.

Le guide d'onde hybride 250 comprend la section proximale 211 et une portion distale d'une extension 311 de la base 310 en regard de la section proximale 211. L'extension 311 de la base 310 s'étend sur la couche de confinement 130, de façon à être en contact avec la face supérieure de la couche de confinement 130, en direction du premier guide d'onde 200, depuis le deuxième guide d'onde 300 jusqu'à une bordure distale 311.1 de l'extension 311. La bordure distale 311.1 est un flanc de l'extension 311, rectiligne dans cet exemple. Elle délimite un angle α avec l'axe optique et l'axe X, dans le plan (X, Y). L'angle α est ici égal à 90°.

La portion distale de l'extension 311 a une largeur W₃₁₁ mesurée parallèlement à l'axe Y. La largeur W₃₁₁ est strictement supérieure à W₂₁₁. De préférence, W₃₁₁ est supérieure ou égale à 10*λ/n₂₁₁, où n₂₁₁ est l'indice de réfraction de la section proximale 211. La largeur W₃₁₁ est ici constante le long de l'axe X, égale à la largeur W₃₁₀.

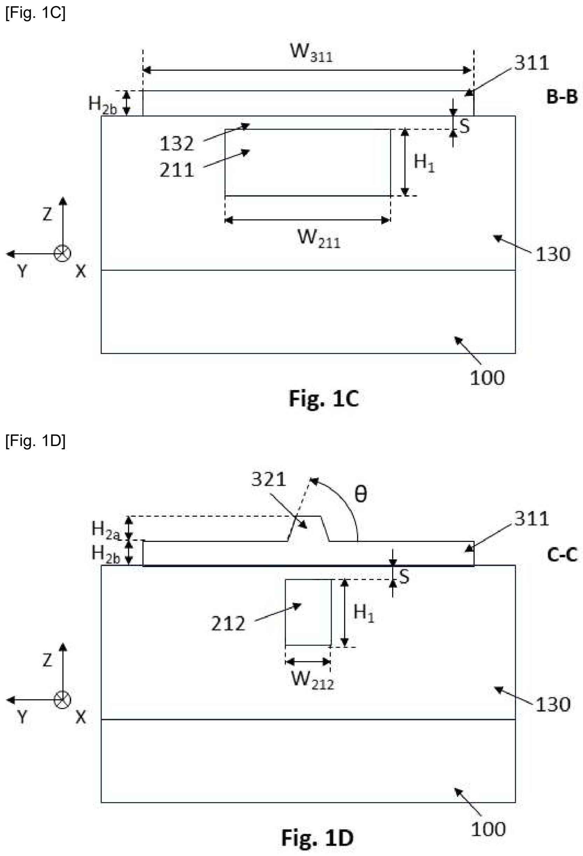

Lorsque le cœur 210 affleure la face supérieure de la couche de confinement 130, l'extension 311 de la base 310 est en contact avec la section proximale 211. Avantageusement, comme cela est représenté en figure 1C, la section proximale 211 est séparée de l'extension 311 par une portion intercalaire 132. La portion intercalaire 132 est une partie de la couche de confinement 130 en contact avec la section proximale 211 et l'extension 311. Elle a une épaisseur S mesurée parallèlement à l'axe Z.

La section de transition modale 270 (figure 1D) s'étend le long de l'axe X, depuis le guide d'onde hybride 250 jusqu'au deuxième guide d'onde 300. Elle comprend la section distale 212 et une portion proximale de l'extension 311 de la base 310, en regard de la section distale 212. La largeur W₂₁₂ décroit progressivement, par exemple linéairement, le long de l'axe orienté +X. Les sections proximale et distale 211, 212 ont par exemple la même largeur à leur jonction, comme cela est représenté en figure 1A. Avantageusement, comme représenté en figure 1A, la section de transition modale 270 peut comprendre une extension 321 de l'arête 320 s'étendant sur l'extension 311 de la base 310 en direction du premier guide d'onde 200. De préférence, l'extension 321 de l'arête 320 s'étend sur toute la portion proximale de l'extension 311, et éventuellement sur une partie de la portion distale de l'extension 311. Ainsi des pertes par diffraction peuvent être évitées. L'extension 321 a ici une hauteur égale à H₂ₐ sur toute sa longueur.

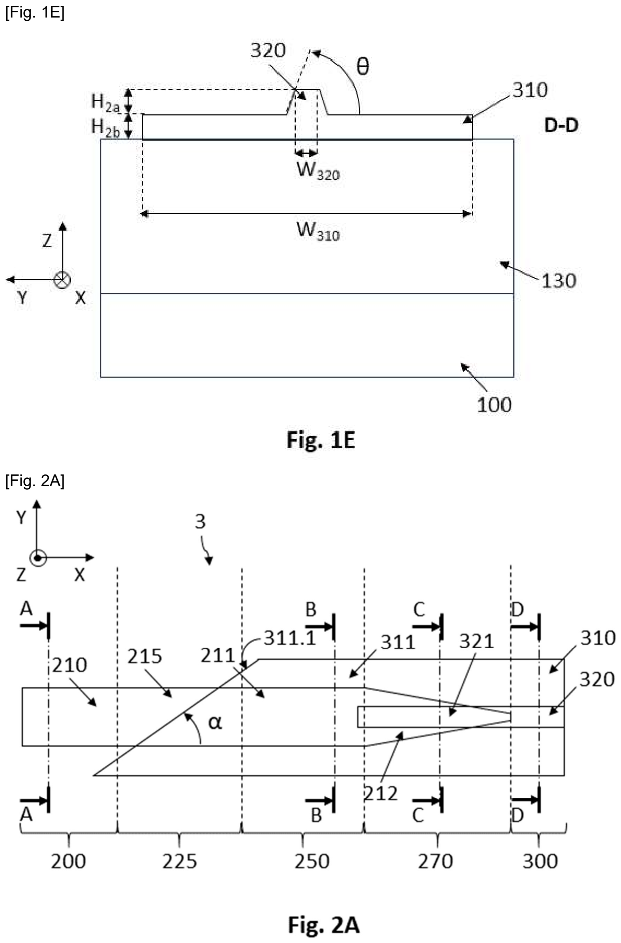

Un deuxième mode de réalisation d'une structure de couplage 2 selon l'invention va à présent être décrit en lien avec la figure 2A. Seules les différences avec le premier mode de réalisation sont explicitement exposées. Les figures 1B, 1C, 1D, 1E sont également des vues selon les coupes A-A, B-B, C-C et D-D de la figure 2A.

Pour ce mode de réalisation, la structure de couplage 2 comprend en outre une section d'adaptation modale 225. Le cœur 210 se prolonge au-delà du premier guide d'onde 200, dans la direction +X, en un prolongement comprenant une section tampon 215, une section proximale 211, suivie d'une section distale 212. La section proximale 211 est intercalée entre la section tampon 215 et la section distale 212 et en contact avec celles-ci. La section tampon 215 est en contact avec le premier guide d'onde 200. Le cœur 210, la section tampon 215, la section proximale 211 et la section distale 212 sont en un même matériau. La section tampon 215 a une largeur W₂₁₅ mesurée parallèlement à l'axe Y, ici sensiblement constante. La largeur W₂₁₅ peut être égale à la largeur W₂₁₁ au niveau de la jonction de la section proximale 211 avec la section tampon 215, comme cela est représenté ici. Elle a une hauteur constante et égale à H₁, mesurée parallèlement à l'axe Z. Dans tous les modes de réalisation, les largeurs W₂₁₀, W₂₁₁, W₂₁₂ et W₂₁₅ sont mesurées dans un même plan parallèle au plan (X, Y), par exemple au niveau d'une face inférieure des sections correspondantes.

La section d'adaptation modale 225 comporte la section tampon 215 et une extrémité de l'extension 311 de la base 310, en regard de la section tampon 215. L'extrémité de l'extension 311 est un prolongement de la portion distale de l'extension 311 qui comprend la bordure distale 311.1. Dans cet exemple, la bordure distale 311.1 a un segment sensiblement rectiligne en vis-à-vis de la section tampon 215. De préférence, le segment s'étend suffisamment en longueur, de part et d'autre de la section tampon 215 dans un plan parallèle au plan (X, Y) pour compenser une limite de résolution de l'extension 311 et/ou une incertitude d'alignement de l'extension 311 par rapport la section tampon 215, lors de la formation de l'extension 311 de la base 310. Pour une incertitude d'alignement de 300 nm, typique d'un équipement de lithographie disponible sur une ligne de production de microsystèmes électromécaniques (ou MEMS, pour Micro-Electro-Mechanical System, en anglais), le segment de la bordure distale 311.1 peut être centrée sur la section tampon 215 et avoir une longueur comprise entre 30 µm et 500 µm, par exemple égale à 300 µm. L'angle α peut être compris entre 4° et 8°. Le segment peut avoir d'autres formes permettant de limiter des pertes par diffraction au passage de la bordure distale 311.1.

L'extrémité de l'extension 311 a par exemple une largeur égale à W₃₁₁, mesurée parallèlement à l'axe Y. L'angle α est un angle aigu, par exemple compris entre 2° et 10°, préférentiellement compris entre 4° et 8°. La bordure distale 311.1 est ainsi un bord biseauté, ou un biseau, de l'extension 311 de la base 310 permettant de minimiser des pertes en transmission. Afin de minimiser ces pertes de transmission, il est possible d'optimiser conjointement W₂₁₅, α et S, par exemple à l'aide d'un outil de simulation.

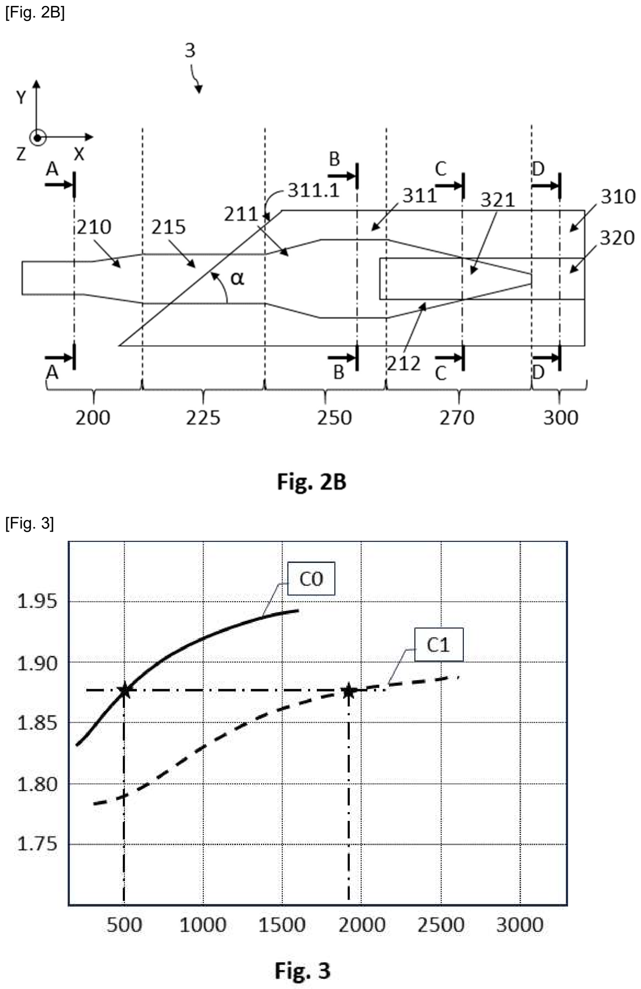

Une variante du deuxième mode de réalisation va à présent être décrit en lien avec la figure 2B. Seules les différences avec le deuxième mode de réalisation sont explicitement exposées. Les figures 1B, 1C, 1D, 1E sont également des vues selon les coupes A-A, B-B, C-C et D-D de la figure 2A.

Ici, la largeur W₂₁₁ est une fonction monotone croissante de X, en s'éloignant de la section tampon 215. La largeur W₂₁₅ est sensiblement constante et égale à la valeur minimale de W₂₁₁. La largeur W₂₁₀ du cœur 210 est égale à la largeur W₂₁₅ au niveau de la jonction entre le cœur 210 et la section tampon 215. Ici, W₂₁₀ est une fonction monotone croissante de X, en s'approchant de la section tampon 215. La largeur W₂₁₂ de la section distale 212 est égale à la valeur maximale de W₂₁₁ au niveau de la jonction entre la section distale 212 et la section proximale 211.

A présent, un exemple de fonctionnement de la structure de couplage 1, 2, 3 va être décrit pour coupler optiquement un premier mode optique se propageant dans le premier guide d'onde 200 à un deuxième mode optique se propageant dans le deuxième guide d'onde 300, étant entendu que la structure de couplage 2 fonctionne de la même façon pour coupler le deuxième mode optique vers le premier mode optique par application du principe du retour inverse de la lumière. Le premier mode optique a un premier indice effectif. Le deuxième mode optique a un deuxième indice effectif strictement supérieur au premier indice effectif. Ici, les premier et deuxième modes optiques ont une polarisation de type transverse électrique (TE).

Dans cet exemple, des dimensionnements sont donnés en lien avec des conditions particulières. Plus précisément, la longueur d'onde λ est égale à 1 550 nm, le cœur 210 est en nitrure de silicium et le deuxième guide d'onde 300 en niobate de lithium. La hauteur H₁ ne peut excéder une hauteur maximale H_{1,max} imposée par des contraintes mécaniques induites par le nitrure de silicium. Elle est égale à 800 nm.

Les hauteurs H_{2b} et H₂ₐ sont ici suffisamment grandes pour réaliser au moins une partie d'un composant photonique actif et le deuxième guide d'onde 300 dans une même couche en niobate de lithium. La somme des hauteurs H₂ₐ et H_{2b} est par exemple comprise entre 300 nm et 1 µm. La hauteur H_{2b} peut par exemple être comprise entre 150 nm et 500 nm. Dans cet exemple, les hauteurs H₂ₐ et H_{2b} sont égales à 300 nm. Le deuxième indice effectif augmente lorsque H₂ₐ et/ou H_{2b} augmentent.

Dans cet exemple, θ a une valeur strictement inférieure à 90° imposée par une étape de gravure utilisée pour la formation du deuxième guide d'onde 300. Le deuxième indice effectif augmente lorsque θ diminue. Dans cet exemple, θ est égal à 50°.

Le premier mode optique est confiné par le cœur 210 et se propage en direction de la section proximale 211. Il atteint une première zone de transition lorsqu'il atteint la bordure distale 311.1. Des pertes par diffraction induites par la bordure distale 311.1 sont minimisées en optimisant le confinement du premier mode optique à l'intérieur du cœur 210 et en éloignant le premier mode optique de la bordure distale 311.1. Ainsi, plus l'épaisseur S est grande, moins les pertes par diffraction sont importantes.

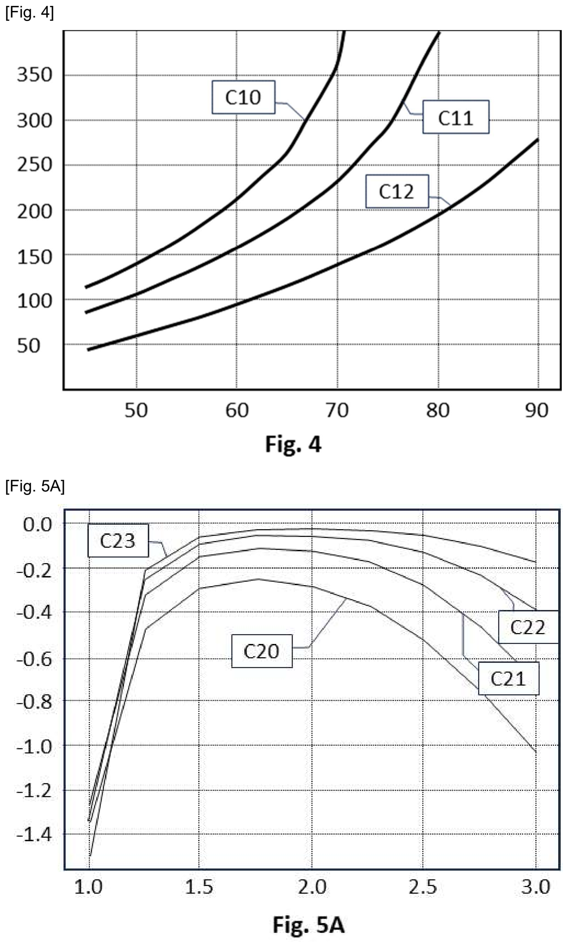

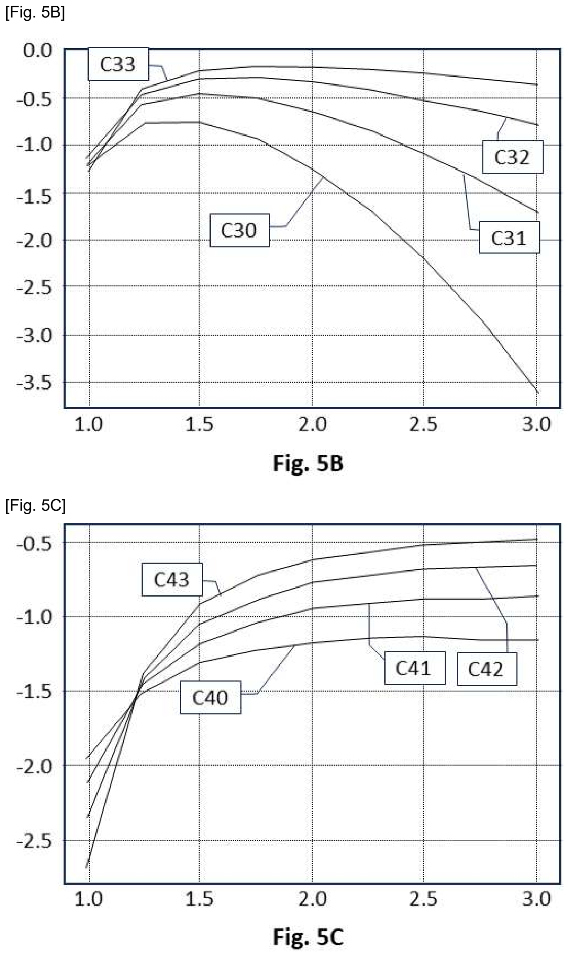

Les figures 5A à 5C montrent des résultats de simulation donnant la perte en transmission (axe des ordonnées, en dB) entre le premier mode optique et un mode optique intermédiaire guidé par le guide d'onde hybride 250, en fonction de la largeur W₂₁₅ (axes des abscisses, en µm). En figure 5A, les pertes de transmission sont données pour un angle α égal à 4° et pour une épaisseur S égale à 50 nm (courbe C20), à 100 nm (courbe C21), à 150 nm (courbe C22), et à 200 nm (courbe C23). En figure 5B, les pertes de transmission sont données pour un angle α égal à 8° et pour une épaisseur S égale à 50 nm (courbe C30), à 100 nm (courbe C31), à 150 nm (courbe C32), et à 200 nm (courbe C33). En figure 5C, les pertes de transmission sont données pour un angle α égal à 30° et pour une épaisseur S égale à 50 nm (courbe C40), à 100 nm (courbe C41), à 150 nm (courbe C42), et à 200 nm (courbe C43).

De façon surprenante, la perte en transmission entre le premier mode optique et le mode optique intermédiaire n'est pas une fonction monotone de W₂₁₅ dès lors que l'angle α est inférieur ou égal à 10°. Pour un angle α compris entre 4° et 8°, les pertes de transmission entre le premier mode optique et le mode optique intermédiaire sont minimales pour une largeur W₂₁₅ comprise entre 1,3 µm et 2 µm, les pertes de transmission étant d'autant plus faibles que S augmente, ici de 50 nm à 200 nm. A titre d'exemple, pour un angle α égal à 4° et une épaisseur S égale à 100 nm, les pertes de transmission atteignent un minimum pour une largeur W₂₁₅ égale à 1,75 µm.

Dans tous les modes de réalisation, la hauteur H_{2b} est en outre préférentiellement suffisamment faible pour que le premier mode optique n'excite pas un mode optique concurrent au mode optique intermédiaire, guidé par l'extension 311 de la base 310. Ce résultat est notamment atteint pour une extension 311 de hauteur H_{2b} quelconque, inférieure ou égale à une valeur H_{2b,max}, dès lors que l'indice effectif de tout mode optique de même longueur d'onde et de même polarisation que le premier mode optique, susceptible de se propager dans l'extension 311, est strictement inférieur au premier indice effectif. La valeur H_{2b,max} peut par exemple être déterminée par simulation.

Au passage de la première zone de transition, le premier mode optique transfert de l'énergie au mode optique intermédiaire guidé par le guide d'onde hybride 250. La largeur W₂₁₁ au niveau de la jonction entre la section proximale 211 et la section distale 212, est supérieure à une largeur minimale W_{211,min} au-delà de laquelle l'indice effectif du mode optique intermédiaire est supérieur ou égal au deuxième indice effectif. Ainsi, il est possible de transférer une énergie du mode optique intermédiaire au deuxième mode optique par la section de transition modale 270.

La figure 3 montre des résultats de simulation donnant l'indice effectif du deuxième mode optique en fonction de la largeur W₃₂₀ (axe des abscisses en nm) de l'arête 320 (courbe C0) et l'indice effectif du mode optique intermédiaire en fonction de la largeur W₂₁₁ (axe des abscisses en nm) de la section proximale 211, pour une épaisseur S égale à 100 nm. Des étoiles repèrent des dimensionnements de cet exemple. Pour celui-ci, la largeur W₃₂₀ de l'arête 320 est choisie supérieure ou égale à 450 nm, en limite de résolution d'un équipement de lithographie disponible sur une ligne de production principalement adaptée à la production de MEMS. Une telle ligne de production est adaptée pour recevoir du niobate de lithium, du titanate de baryum, ou du tantalate de lithium. La largeur W₃₂₀ est ici égale à 500 nm.

A partir de la figure 3, on repère que W_{211,min} est égal à 1 900 nm. W₂₁₁ est par conséquent choisi strictement supérieur à 1,9 µm, par exemple dans une gamme comprise entre 2 µm et 3 µm.

Il a été observé que la largeur minimale W_{211,min} augmente lorsque l'épaisseur S augmente et/ou lorsque θ diminue. La figure 4 montre des résultats de simulation donnant la valeur maximale Sₘₐₓ de l'épaisseur S (axe des ordonnées, en nm) en-deçà de laquelle l'indice effectif du mode optique intermédiaire est strictement supérieur au deuxième indice effectif, en fonction de θ (axe des abscisses, en degrés), pour une largeur W₂₁₁ au niveau de la jonction entre la section proximale 211 et la section distale 212, égale à 2,5 µm (courbe C10), à 2,0 µm (courbe C11) et à 1,5 µm (courbe C12).

L'épaisseur S est choisie la plus grande possible pour minimiser les pertes de transmission au passage de la première transition, tout en restant en-deçà d'une borne supérieure Sₛᵤₚ inférieure ou égale à Sₘₐₓ, permettant, par exemple, de garantir que les épaisseurs S d'une pluralité de structures de couplage 1 soient inférieures ou égales à Sₘₐₓ malgré des incertitudes d'un procédé fabrication. Dans cet exemple, la largeur W₂₁₁ est choisie égale à 2,5 µm et S égale à 100 nm.

Le mode optique intermédiaire atteint ensuite la section de transition modale 270. A la jonction entre la section proximale 211 et la section distale 212, la largeur W₂₁₂ est égale à la largeur W₂₁₁. La largeur W₂₁₂ décroit progressivement de façon monotone, par exemple de façon linéaire, en direction du deuxième guide d'onde 300, pour faire décroître l'indice effectif du mode optique intermédiaire jusqu'à atteindre et dépasser le deuxième indice effectif. Ainsi, une partie de la puissance du mode optique intermédiaire est transférée au deuxième mode optique. L'extension 321 de l'arête 320 s'étend depuis le deuxième guide d'onde 300 au moins jusqu'à l'endroit où l'indice effectif du mode optique intermédiaire est égal au deuxième indice effectif. Dans cet exemple, la largeur W₂₁₂ décroit jusqu'à atteindre la valeur de 200 nm, sur une longueur comprise entre 10 µm et 50 µm mesurée le long de l'axe +X. La section distale 212 peut être formée en utilisant des équipements d'une ligne de production CMOS, puisque le nitrure de silicium est un matériau commun sur ce type de lignes de production.

La section de transition modale 270 permet de transférer la puissance du mode optique intermédiaire au deuxième mode optique avec une perte inférieure à 1 dB pour l'épaisseur S égale à 100 nm de cet exemple. Une diminution de l'épaisseur S permet de diminuer les pertes de transmission au passage de la section de transition modale 270, jusqu'à des valeurs inférieures ou égales à 0,5 dB avec les paramètres et les matériaux de cet exemple.

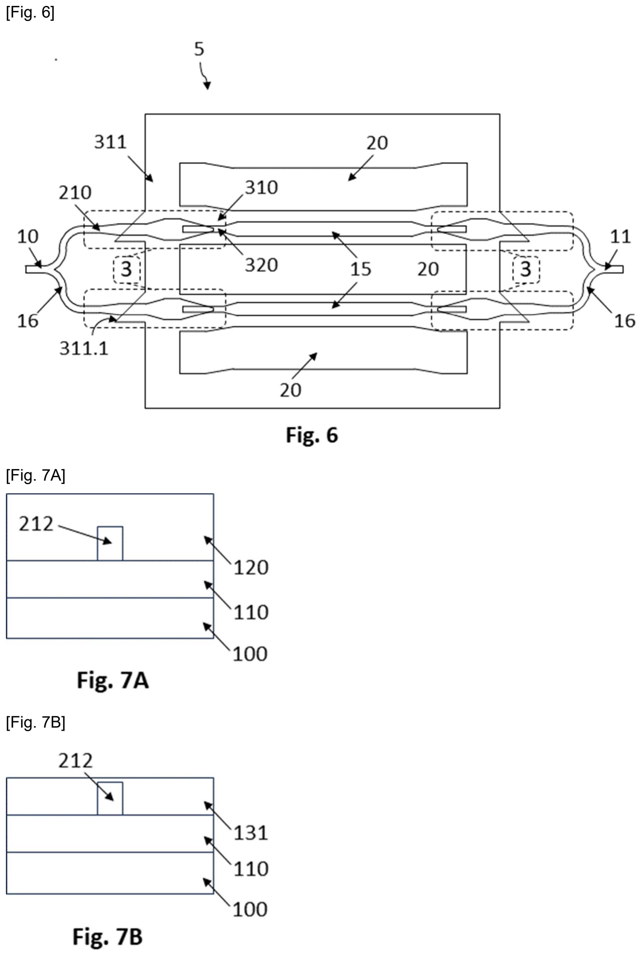

En lien avec la figure 6, il est à présent décrit un modulateur Mach-Zehnder 5 mettant en œuvre des structures de couplages 3 selon la variante du deuxième mode de réalisation. Il est susceptible de fonctionner à des fréquences supérieures ou égales à 50 GHz. Les structures de couplage 3 sont repérées par des rectangles en pointillés sur cette figure. Une ou plusieurs structures de couplage parmi celles-ci peuvent cependant être remplacées par une structure de couplage 1, 2 selon le premier ou le deuxième mode de réalisation.

Le modulateur Mach-Zehnder 5 comporte deux bras 15. Au moins un bras comprend un déphaseur commandable, apte à appliquer un déphasage à un mode optique guidé par le déphaseur par rapport à un mode optique guidé par l'autre bras 15, en fonction d'un signal d'entrée. Le déphasage peut être appliqué par tous moyens connus, par exemple par injection de porteurs de charges, ou par utilisation d'un effet Pockels induit par un champ électrique ou une contrainte mécanique pour obtenir une maille non centro-symétrique. Le signal d'entrée agit sur le déphaseur au moyen d'électrodes. Dans le cas d'un fonctionnement par effet Pockels, les électrodes appliquent au champ électrique au déphaseur de façon à modifier son indice de réfraction.

Dans cet exemple, chaque bras comprend deux structures de couplage 3 agencées à deux extrémités du bras 15 et un déphaseur couplé optiquement à chaque structure de couplage 3 du bras. Le modulateur Mach-Zehnder 5 comporte en outre une entrée 10 et une sortie 11. L'entrée 10 et la sortie 11 sont chacune couplée optiquement à chacun des bras 15 par une jonction Y 16 distincte du modulateur Mach-Zehnder 5. Ici, pour chaque structure de couplage 3, le premier guide d'onde est en nitrure de silicium. Chaque jonction Y est en nitrure de silicium. Pour chaque structure de couplage 3, le premier guide d'onde est couplé optiquement à une extrémité d'une jonction Y correspondante, ici par un couplage bout-à-bout.

Les bases 310 et les extensions 311 des quatre structures de couplage 3 sont des parties d'une couche commune. Chaque déphaseur est un guide d'onde en arête. Il comporte une arête qui est une partie surélevée de la couche commune. L'arête de chaque déphaseur prolonge l'arête 320 du deuxième guide d'onde de chaque structure de couplage 3 à laquelle le déphaseur est couplé optiquement. Ainsi, chaque déphaseur est couplé optiquement à deux structures de couplage 3 par un couplage bout-à-bout. Dans cet exemple, les déphaseurs ont toutes leurs dimensions géométriques égales. Les arêtes 320 des structures de couplage 3 et des déphaseurs sont des parties de la couche commune. Ici, toutes les structures de couplage 3 ont toutes leurs dimensions géométriques égales. Elles sont en des mêmes matériaux.

La couche commune est ici en un matériau optique non linéaire de deuxième ordre, par exemple en niobate de lithium. Le modulateur Mach-Zehnder 5 comporte en outre des électrodes 20 reposant sur la couche commune. Deux électrodes 20 sont agencées de part et d'autre de chaque bras 15, de sorte à appliquer un champ électrique modifiant un indice de réfraction de chaque déphaseur par effet Pockels lorsqu'une différence de potentiel électrique est appliquée à leurs bornes. Dans cet exemple, le modulateur Mach-Zehnder 5 peut être polarisé en mode « push-pull », selon une terminologie anglaise communément employée dans le domaine technique, de sorte que le champ électrique soit de sens opposé dans les deux bras du modulateur.

Les électrodes 20 consistent en une électrode centrale et en deux électrodes externes. L'électrode centrale s'étend sur la couche commune entre les deux déphaseurs du modulateur Mach-Zehnder 5, parallèlement à ceux-ci. Chaque électrode externe s'étend sur la couche commune parallèlement à un déphaseur, d'un côté du bras 15 correspondant, opposé à l'électrode centrale.

Les électrodes externes ont par exemple chacune une largeur au moins égale à 100 µm. L'électrode centrale possède ici une largeur fixée à 10 µm. La distance séparant l'électrode centrale d'une électrode externe est par exemple égale à 5 µm. Les électrodes peuvent être en métal, par exemple en aluminium et/ou en chrome.

L'arête de chaque déphaseur a une largeur Wₘ permettant de réduire des pertes de propagation. La largeur Wₘ est par exemple strictement supérieure à la largeur W₃₂₀ des arêtes 320 de toutes les structures de couplage 3. Elle peut être strictement supérieure à une largeur W_{320,max} de l'arête 320 au-delà de laquelle il n'est pas possible d'obtenir un indice effectif du mode optique intermédiaire strictement supérieur au deuxième indice effectif pour toutes valeurs de la largeur W₂₁₁. Les pertes de propagation sont d'autant plus faibles que la largeur Wₘ est grande. L'efficacité d'un déphasage par unité de longueur appliqué à un mode optique guidé par le déphaseur dépend de plusieurs paramètres dont la largeur Wₘ, et les hauteurs H₂ₐ, H_{2b}. Suivant les applications, un compromis sur la valeur de Wₘ peut être recherché pour obtenir des pertes de propagation et une efficacité de déphasage souhaitées. A titre d'exemple, pour des hauteurs H₂ₐ, H_{2b} toutes deux égales à 300 nm, la largeur Wₘ peut être choisie supérieure ou égal à 750 nm, préférentiellement sensiblement égale à 1,15 µm. Chaque déphaseur s'étend entre deux structures de couplage 3 sur une longueur comprise entre 2 mm et 1 cm, par exemple égale à 5 mm.

Un exemple de procédé de réalisation d'une structure de couplage 1, 2, 3 tel qu'illustré sur les figures 7A à 7F. est maintenant décrit. Les figures 7A à 7F sont des vues selon la coupe C-C des figures 1A, 2A et 2B.

En figure 7A, on fournit un premier ensemble comprenant le substrat 100, une couche de confinement inférieure 110, le cœur 210, le prolongement du cœur 210 qui comporte la section proximale 211, la section distale 212, et éventuellement la section tampon 215. Le cœur 210 et le prolongement du cœur 210 peuvent être une partie d'une couche structurée comprenant des composants photoniques passifs. La couche structurée peut être obtenue par une étape de dépôt, par exemple un dépôt chimique en phase vapeur à basse pression (ou LPCVD, pour Low Pressure Chemical Vapor Deposition, en anglais), un dépôt physique en phase vapeur (ou PVD, pour Physical Vapor Deposition, en anglais) ou un dépôt chimique en phase vapeur assisté par plasma (ou PECVD, pour Plasma Enhanced Chemical Vapor Deposition, en anglais), suivi d'une ou plusieurs sous-étapes de lithogravure, par exemple au moyen d'équipements disponibles sur une ligne de production de circuits CMOS. La couche structurée est ici en nitrure de silicium.

La couche de confinement inférieure 110 repose sur la face supérieure du substrat 100, en contact avec celle-ci. On dépose une couche d'encapsulation 120 sur la couche de confinement inférieure 110 et sur la couche structurée, de façon à encapsuler le cœur 210 et le prolongement du cœur 210. La couche de confinement inférieure 110 et la couche d'encapsulation 120 sont par exemple en oxyde de silicium résultant d'un dépôt PVD ou PECVD.

Alternativement, la couche structurée peut avoir été formée par un procédé de type damascène postérieurement à un dépôt d'une partie au moins de la couche d'encapsulation 120.

En figure 7B, la couche d'encapsulation 120 est amincie, par exemple par une sous-étape de polissage mécano-chimique (ou CMP, pour Chemical Mechanical Polishing, en anglais). La partie résiduelle de la couche d'encapsulation 120 constitue une couche de confinement supérieure 131. La couche de confinement supérieure 131 a une face de collage d'un côté de la couche de confinement supérieure 131 opposée au substrat 100. De préférence, la face de collage de la couche de confinement supérieure 131 recouvre le cœur 210 et le prolongement du cœur 210, comme représenté sur la figure 7B. La face de collage a des propriétés de planéité, de rugosité et de compatibilité chimique permettant le collage, notamment un collage moléculaire.

La couche de confinement supérieure 131 peut comprendre une sous-couche de collage optionnelle déposée après l'amincissement de la couche d'encapsulation 120. Il peut s'agir d'une sous-couche en oxyde d'aluminium ou d'une couche de polymère Benzo Cyclo Butene (BCB). Elle peut être déposée par une technique de dépôt de couches atomiques (ou ALD, pour « Atomic Layer Deposition » en anglais) ou un dépôt assisté par faisceaux d'ions (ou IBAD, pour « Ion Beam Assisted Deposition » en anglais) ou par étalement par centrifugation (ou « spin coating », en anglais).

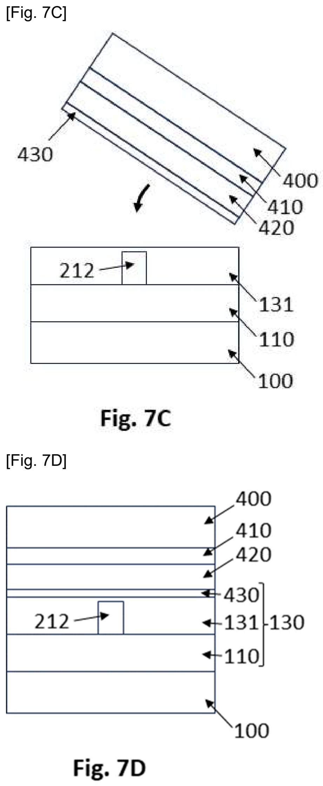

En figure 7C, on fournit un deuxième ensemble comprenant un substrat temporaire 400, une couche enterrée 410 et une couche active 420. La couche enterrée 410 est intercalée entre le substrat temporaire 400 et la couche active 420. Elle est en contact avec le substrat temporaire 400 et la couche active 420. La couche active 420 peut être en niobate de lithium ou en titanate de baryum. La couche enterrée 410 est en un matériau apte à être gravé sélectivement par rapport à la couche active 420. La couche enterrée 410 est ici en oxyde de silicium. Le substrat temporaire 400 peut être en silicium, en quartz, en verre de silice, ou en niobate de lithium. Ici, la couche active 420 est en niobate de lithium, la couche enterrée 410 en oxyde de silicium et le substrat temporaire 400 en silicium.

On dépose une couche de collage 430 sur la couche active 420. Lors d'une sous-étape de collage, la face de collage de la couche de confinement supérieure 131 est ensuite mise en contact avec la couche de collage 430, après d'éventuels traitements de surface, de façon à coller le premier ensemble sur le deuxième ensemble. La couche de collage 430 est par exemple une couche en oxyde de silicium ou oxyde d'aluminium. La sous-étape de collage peut être un collage oxyde-oxyde ou alumine-alumine. Il peut s'agir d'un collage moléculaire hydrophile.

En figure 7D, on effectue un éventuel traitement thermique pour renforcer une interface de collage entre la couche de collage 430 et la couche de confinement supérieure 131. La couche de confinement 130 consiste en la couche de confinement inférieure 110, la couche de confinement supérieure 131 et la couche de collage 430. La portion intercalaire 132 consiste en une partie de la couche de confinement supérieure 131 et une partie de la couche de collage 430. Elle peut comprendre une interface de collage résiduelle entre la couche de confinement supérieure 131 et la couche de collage 430, la couche de confinement supérieure 131 pouvant comprendre une sous-couche de collage en contact avec la couche de collage 430. Dans le cas d'un collage moléculaire, l'interface de collage peut être fermée, c'est-à-dire qu'elle ne comprend que des liaisons covalentes entre la couche de confinement supérieure 131 et la couche de collage 430.

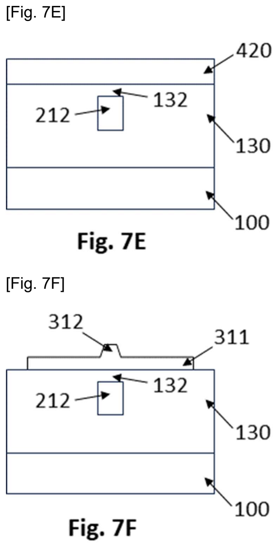

En figure 7E, on retire le substrat temporaire 400 par une ou plusieurs sous-étapes de rodage et/ou de polissage et/ou de gravure, par exemple chimique, le cas échéant la gravure peut mettre en œuvre une solution d'hydroxyde de tétraméthylammonium (TMAH). On retire ensuite la couche enterrée 410 par une gravure sélective par rapport à la couche active 420. Dans cet exemple de procédé, la gravure sélective met en œuvre une solution d'acide fluorhydrique (HF).

Optionnellement, notamment lorsque le substrat temporaire 400 a une dimension plus petite qu'une dimension du substrat 100, une couche fine protectrice est déposée de façon conforme sur la couche de confinement 130 et le substrat temporaire 400, entre l'étape de la figure 7D et l'étape de la figure 7E. La partie de la couche fine en contact avec le substrat temporaire 400 est retirée avec le substrat temporaire 400 lors de la sous-étape de retrait du substrat temporaire 400. La couche fine protectrice est en un matériau résistant à la gravure sélective utilisée pour retirer la couche enterrée 410. La couche fine protectrice peut être en nitrure de silicium.

En figure 7F, on forme le deuxième guide d'onde 300 dans la couche active 420, par exemple à l'aide d'un ou plusieurs équipements de lithogravure ayant une limite de résolution supérieure ou égale à 450 nm, disponible(s) dans une ligne de production de MEMS. La base 310, l'extension 311 de la base 310 et l'arête 320 sont par exemple formés par une gravure par faisceau d'ions (ou IBE, pour Ion Beam Etching, en anglais) ou une gravure ionique réactive (ou RIE, pour Reactive Ion Etching, en anglais), à base d'ions argon. La base 310, l'extension 311 de la base 310 et l'arête 320 peuvent alors avoir des flancs faisant un angle avec la face supérieure du substrat 100 compris entre 40° et 90°, ou entre 40° et 80°, ou entre 40° et 80°, ou sensiblement égal à 50°.

Des modes de réalisation particuliers viennent d'être décrits. Différentes variantes et modifications apparaîtront à l'homme du métier. Il est par exemple possible d'encapsuler la section d'adaptation modale 225 et/ou le guide d'onde hybride 250 et/ou la section de transition modale 270 et/ou le deuxième guide d'onde 300 par une couche d'encapsulation supplémentaire reposant sur la couche de confinement 130, sur la base 310 et/ou l'extension 311 de la base 310 et/ou l'arête 320. La couche d'encapsulation supplémentaire est alors transparente à la longueur d'onde λ et a un indice de réfraction permettant une fonction de confinement de la lumière.

## Revendications

1. Structure de couplage (1, 2, 3) pour coupler optiquement un premier mode optique ayant un premier indice effectif et un deuxième mode optique ayant un deuxième indice effectif strictement supérieur au premier indice effectif, la structure de couplage (1) comportant :
∘ un premier guide d'onde (200) comprenant un cœur (210) configuré pour guider le premier mode optique, le cœur (210) se prolongeant au-delà du premier guide d'onde (200) en un prolongement comportant une section proximale (211), proche du premier guide d'onde (200), et une section distale (212) en contact avec la section proximale (211),
∘ un deuxième guide d'onde (300) comprenant une base (310) et une arête (320), configurées pour guider le deuxième mode optique,
∘ un guide d'onde hybride (250), intercalé entre le premier et le deuxième guides d'onde (200, 300), comprenant la section proximale (211) et une extension (311) de la base (310) au-delà du deuxième guide d'onde (300), agencées de façon à coopérer pour guider un mode optique intermédiaire couplé optiquement au premier mode optique par le prolongement,
∘ une section de transition modale (270) s'étendant depuis le guide d'onde hybride (250) jusqu'au deuxième guide d'onde (300), comprenant la section distale (212) ;
la structure de couplage étant telle que :
∘ la section proximale (211) a une largeur au niveau d'une jonction avec la section distale (212) telle qu'un indice effectif du mode optique intermédiaire est strictement supérieur au deuxième indice effectif,
∘ la section distale (212) se rétrécit continument en s'éloignant du guide d'onde hybride (250) de façon à réaliser un couplage optique entre le mode optique intermédiaire et le deuxième mode optique.

2. Structure de couplage (1, 2, 3) selon la revendication 1, dans laquelle la section proximale (211) est séparée de l'extension (311) de la base (310) par une portion intercalaire (132) diélectrique.

3. Structure de couplage (1, 2, 3) selon la revendication 2, dans laquelle la portion intercalaire (132) est en oxyde de silicium ou en oxyde d'aluminium.

4. Structure de couplage (2, 3) selon l'une quelconque des revendications 1 à 3, dans laquelle le prolongement comprend en outre une section tampon (215) intercalée entre le premier guide d'onde (200) et la section proximale (211), l'extension (311) de la base (310) comporte un biseau (311.1) en regard de la section tampon (215) faisant un angle α inférieur ou égal à 10° avec un axe optique du premier guide d'onde, et s'étendant de part et d'autre de la section tampon (215).

5. Structure de couplage (2, 3) selon les revendications 2 et 4, dans laquelle l'angle α est inférieur ou égal à 8°, et la section tampon (215) a une largeur comprise entre 1,3 µm et 2 µm.

6. Structure de couplage (2, 3) selon la revendication 5, dans laquelle la portion intercalaire (132) a une épaisseur S comprise entre 50 nm et 200 nm.

7. Structure de couplage (1, 2, 3) selon l'une quelconque des revendications précédentes, dans laquelle le cœur (210) est en nitrure de silicium et la base (310) en niobate de lithium, en tantalate de lithium, ou en titanate de baryum.

8. Structure de couplage (1, 2, 3) selon la revendication 7, dans laquelle l'arête (320) est en niobate de lithium, en tantalate de lithium, en titanate de baryum, en nitrure de silicium, en oxyde de titane, en oxyde de tantale, en carbure de silicium, ou en silicium.

9. Structure de couplage (1, 2, 3) selon l'une quelconque des revendications précédentes, dans laquelle l'arête (320) a une largeur W₃₂₀ supérieure ou égale à 450 nm.

10. Structure de couplage (1, 2, 3) selon la revendication 9, dans laquelle la structure de couplage (1, 2, 3) comporte en outre un substrat (100), le deuxième guide d'onde (300) s'étend parallèlement à une face supérieure du substrat (100) et l'arête (320) a des flancs faisant un angle inférieur ou égal à 80° par rapport à la face supérieur du substrat (100).

11. Structure de couplage (1, 2, 3) selon l'une quelconque des revendications précédentes, dans laquelle l'extension (311) a une hauteur H_{2b} telle que l'indice effectif de tout mode optique de même longueur d'onde et de même polarisation que le premier mode optique, susceptible de se propager dans l'extension (311), est strictement inférieur au premier indice effectif.

12. Modulateur optique (5) comprenant une structure de couplage (1, 2, 3) selon l'une quelconque des revendications 1 à 11.

13. Modulateur optique (5) selon la revendication 12, tel que le moduleur est un modulateur Mach-Zehnder (5) comprenant deux bras (15), un bras (15) comportant un déphaseur commandable par effet Pockels, couplé optiquement au deuxième guide d'onde (300) de la structure de couplage (1, 2, 3) par un couplage bout-à-bout.

14. Procédé de fabrication d'une structure de couplage (1, 2, 3) selon l'une quelconque des revendications 1 à 11, comprenant les étapes successives suivantes :
∘ fourniture d'un premier ensemble comprenant un substrat (100), le cœur (210) du premier guide d'onde (200) et une couche de confinement supérieure (131), tel que le cœur (210) s'étend sur le substrat (100) parallèlement à une face supérieure du substrat (100), et la couche de confinement supérieure (131) encapsule le cœur (210),
∘ report d'une couche active (420) sur le cœur (210) et la couche de confinement supérieure (131),
∘ formation du deuxième guide d'onde (300) dans la couche active (420).

15. Procédé de fabrication selon la revendication 14, dans lequel la structure de couplage (1, 2, 3) est une structure de couplage (1, 2, 3) selon la revendication 2 ; la couche de confinement supérieure (131) a une face de collage recouvrant le cœur (210), sensiblement parallèle à la face supérieure ; l'étape de report est un collage moléculaire de la face de collage avec une couche de collage (430) en contact avec la couche active (420) ; et la portion intercalaire (132) consiste en une partie de la couche de confinement supérieure (131) et une partie de la couche de collage (430).

16. Procédé de fabrication selon la revendication 15, dans lequel la couche de confinement supérieure (131) et la couche de collage (430) sont en oxyde de silicium.

17. Procédé de fabrication selon l'une quelconque des revendications 14 à 16, dans lequel la couche active (420) est en niobate de lithium, en tantalate de lithium, ou en titanate de baryum.
